# EUROPEAN PATENT SPECIFICATION

(11) **EP 3 134 186 B1**
(45) Date of publication and mention of the grant of the patent: **06.06.2018**
(21) Application number: 15720030.4
(22) Date of filing: 23.04.2015
(51) Int. Cl.: E04D 13/12, E04G 21/32, A62B 35/00

(54) **SAFETY SYSTEM, IN PARTICULAR A FALL PROTECTION SYSTEM**
SICHERHEITSSYSTEM, INSBESONDERE EIN STURZSICHERUNGSSYSTEM
SYSTÈME DE SÉCURITÉ, EN PARTICULIER UN SYSTÈME DE PROTECTION ANTICHUTE

(30) Priority: 25.04.2014 EP 14166101
(43) Date of publication of application: 01.03.2017
(73) Proprietor: Snakeline B.V., 3707 TB Zeist (NL)
(72) Inventor: BORRA, Hans Antonius, 3707 TB Zeist (NL)
(74) Representative: De Vries & Metman
(86) International application number: PCT/EP2015/058843
(87) International publication number: WO 2015/162223

(56) References cited:
- EP-A2- 2 317 029
- WO-A1-2013/095095
- WO-A1-2013/125945
- US-A1- 2010 213 004

## Description

The invention relates to a safety system, in particular a fall protection system, for a structure, e.g. for a roof, in particular a pitched roof, a pylon, or a wind turbine, comprising an anchor attached or configured to be attached to an upper part of the structure and/or upwards of a work area, e.g. at, just below or near the ridge of a roof or on the upper half of a pylon or wind turbine, and a safety line with which a person working on the structure can be secured to the anchor.

Such systems are known, for instance from EP 593 150. This patent publication relates to "a safety device for ensuring the safety of any person requiring access to a roof area of a building whether during building, maintenance works, inspection, or cleaning."

The device according to EP 593 150 comprises "a roof ridge portion (6), a channel (2) integral to the said roof ridge portion (6), a traveller (4) slidably attached to the said channel (2), and attachment means for a safety harness (5) attached to the said traveller (4)."

In many cases the safety line is provided at one end with a carabiner, which is attached to the anchor point from a location at the eaves, for instance from the point where a ladder is set in position, using a lance. The roofer has to take this, often heavy, lance up with him and reach up high with it, which may cause him/her to lose balance.

The invention has for its object to provide a system with which a safety line can be temporarily installed in a relatively simple and safe manner, e.g. at a higher anchor point, for instance to an anchor on or immediately beneath the ridge of a pitched roof.

To this end, the system according to the invention (as defined in claim 1) comprises a guide member for the safety line, which guide member has a first end for giving out the safety line and a second end for feeding the safety line to the guide ; wherein the invention is characterised by said first end of guide member being securely connected to the anchor e.g. positioned at and/or in the anchor or connected to the anchor via a cable, chain or rod and wherein, the second end of the guide member is positioned at a lower location on the structure or below the structure.

With the system according to the present invention, a safety line can be pushed through the guide member and thus towards the anchor, e.g. from a safely accessible location, such as a point where a ladder is set in position. At or near the anchor, the safety line is given out via the far end of the guide member that is secured to the anchor, and let down e.g. back towards the safely accessible location.

In an embodiment, the second end of the guide member is located within reach of a safely accessible location.

To increase security and ease of use, in another embodiment, the system comprises a further anchor for securing a (trailing) portion or end of the safety line. In a refinement, the further anchor is attached or configured to be attached to the structure at the lower location on the structure or below the structure. In another refinement, the second end of the guide member is positioned at and/or in the anchor or connected to the anchor via a further element, such as a cable, chain or rod.

In an embodiment, at least one of the anchors, preferably at least the upper anchor, is attached to a load bearing element of the structure, such as a main beam, a ridge beam or one or more rafters.

More in general, it is preferred that the anchors comply with European Standard EN 795.

To provide substantially unobstructed guiding of the safety line, in an embodiment, the guide member comprises a tube or gutter.

In a further embodiment, at least part of the guide member and/or at least one of the anchors is positioned beneath or integrated in roof covering, such as tiles, a solar collector or photovoltaic cells. Thus, the system, although permanently present, is visible only in part or even hardly visible at all.

To facilitate returning the given out safety line e.g. to a safely accessible location, in an embodiment, the first (and upper) end of the guide member comprises a bend, preferably curved and preferably extending over at least 90° so as to direct the safety line downwards.

In a refinement, the bend is arranged to permanently deform in case of an incident, e.g. a fall. The bend may thus serve as a 'tell tale' facilitating inspection and reducing the risk that a safety system that has been exposed to incident will not be checked.

In an embodiment, the anchor(s) and the guide member are permanently attached to the structure, i.e. remains attached to the structure when no safety line is present or work performed and typically during one or more, e.g. at least five years.

The invention further relates to a structure, such as a roof, pylon, or wind turbine, comprising an anchor attached to an upper part of the structure and/or upwards of a work area and a guide member for a safety line, which guide member has a first end for giving out the safety line and securely connected to the anchor and a second end for feeding the safety line to the guide member positioned at a lower location on the structure or below the structure. The embodiments of the safety system presented above apply also to this structure. E.g. the structure can comprise a further anchor for securing a (proximal) portion or end of the safety line and/or the guide member is positioned at and/or in at least one of the anchors or connected to at least one of the anchors via a further element, such as a cable, chain or rod.

In another embodiment, the second end of the guide member is located within reach of a safely accessible location.

Within the framework of the present invention the words "safety line" refer to any long, thin and flexible element that is suitable for, respectively, securing a person to an anchor on a structure, e.g. a roof as described above, and that is sufficiently stiff to be pushed through the guide member. Examples include cords, lifelines, lanyards, and elements such as (steel) cables and chains, e.g. plastic-coated chains.

In an embodiment, the safety line comprises a reinforcement, such as a core or sheath, and/or is a braided rope. In a refinement, the ratio (P/D) of the pitch (P) of the braid of the rope and the diameter (D) of the rope is smaller than 2.5, preferably smaller than 2.3, preferably smaller than 2. Such ropes, obtained via relatively tight braiding, can be pushed quickly through a guide member and yet are relatively flexible.

The words "securely connected" refer to connections to anchors that can bear a static load, in particular with the safety line in the guide and the load attached to the safety line, preferably of at least 500 kg, preferably at least 750 kg, preferably at least 1.000 kg, and/or preferably comply with European Standard EN 795.

For the sake of completeness, reference is made to the following publications.

WO 2013/125945, the disclosure of which is considered to be the most relevant prior art and forms the preamble of the subject-matter of claim 1, relates to a "method for the installation of a safety line on a pitched roof of a building for securing a user. Use is made of a guide member for the safety line, comprising a lower end and an upper end. The guide member has a bending stiffness which is larger than that of the safety line. The guide member is installed on the roof, in such a way that the lower end can be reached by hand without having to set foot on the pitched roof, and such that the upper end is located at an elevated level on the pitched roof. The safety line is pushed upward by the guide member in order to push an increasingly long part of the safety line out of the upper end of the guide member. That part is guided over the ridge of a pitched roof and subsequently attached to the building by the user."

US 2010/213004 relates to a safety assembly that provides a lifeline for utility poles and other tall structures is provided. The safety assembly includes a tubular member and a positioning member. The tubular member has first and second openings to a passage. The passage is configured to receive a rope.

The invention will now be explained with reference to the figures, in which an example of the invention is shown. The invention is described in claim 1. Preferred embodiments are described in the dependent claims.
Figure 1 is a perspective view of a fall protection system according to the invention installed on a pitched roof, beneath the tiles.
Figure 2 shows the safety system of Figure 1 with a few tiles removed from the roof.

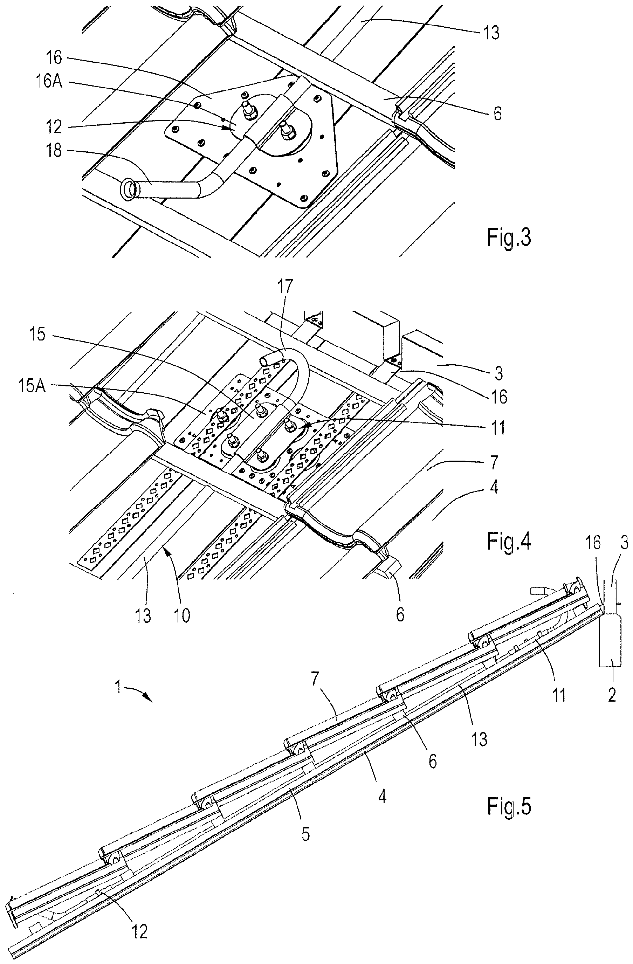

Figures 3 and 4 are enlarged details of Figure 2. Figure 5 is a side view of the safety system of Figure 1.

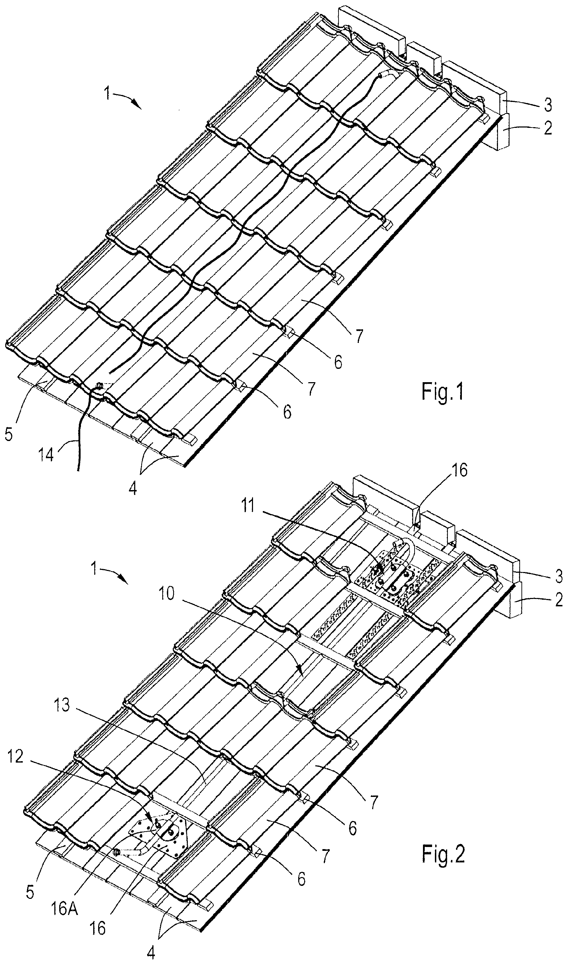

Figures 1 and 2 show a traditional pitched roof 1 comprising a main beam 2 and a ridge beam 3 mounted on top of the main beam and at the apex of the roof 1. Roof slabs 4 are fixed, e.g. nailed, to rafters (not shown) and the main beam 2. Vertical battens 5 are fixed to the roof slabs 4 and horizontal battens 6 are fixed to the vertical battens 5 at some distance from the roof slabs to allow dirt and water to flow downwards and to improve ventilation. Rows of roof tiles 7 are supported on the horizontal battens 6.

A fall protection system 10 is installed on the pitched roof 1. It comprises a first or upper anchor 11, a second or lower anchor 12, a guide member, in this example a tube 13 extending through and between the upper and lower anchors 11, 12 in a straight line, and a safety line 14 with which a person working on the roof can be secured to the anchors 11, 12.

In this example, the upper anchor 11 comprises a clamp 15 fixed, e.g. bolted, to a cross-plate 15A, which, in turn, is fixed, e.g. bolted, to metal strips 16 that are suspended from the ridge beam 3 and extend along the roof slabs 4. As the metal strips each have a series of openings extending along the length of the strips, the anchor 11 can be adjusted for height, e.g. to the position of the tiles or other features on the roof. The anchor plate 15A is also bolted directly to the roof slabs.

The lower anchor 12 also comprises a clamp 16A fixed, e.g. bolted, to an anchor plate 16, which, in turn, is fixed, e.g. bolted, to the roof slabs. Alternatively or additionally, the plate could be fixed to (longer variants of) the metal strips and/or at least one of the anchors could be fixed to the rafters. In another alternative, at least one of the anchors is fixed to an anchor plate or crossbars that are fixed to the rafters, e.g. to allow for laterally adjusting the position of the anchor(s).

In this example, the tube 13 extends through and between the upper and lower anchors 11, 12 and is, at its top end, provided with a curved bend extending over almost 180°. The lower end of the tube extends over an angle of e.g. 45°.

The fall protection system is used as follows. A roofer sets a ladder in position against the eaves at the point where the lower end of the guide tube is located and climbs up with a safety line. At the top of the ladder or standing on the eaves, e.g. depending on the location of the lower end of the tube, the roofer inserts one end of safety line in de guide member and pushes the line towards the upper anchor and through the bend. Here, the end of the line is redirected downwards, towards the roofer. Next, the roofer secures the other (or proximal) end of the safety line to the lower anchor and the first (or distal) end of the safety line to his harness. The roofer can now move safely on and along the roof. When he has completed his work, he returns to the ladder and undoes the connection. Next, he withdraw the safety line from the guide member and climbs down via the ladder.

With this fall protection system a safety line can be installed relatively quickly anf safely. Moreover, the system is hardly visible, if at all, i.e. it has no or hardly any effect on the appearance of the roof.

The invention is not limited to the described embodiments and can be varied within the framework of the claims. For instance, instead of a tube, the guide member may comprise e.g. a gutter, a hose, or a series of narrow funnels. As a further instance, the proximal end of the safety line is provided with an obstruction that can be clamped fitted in the tube and thus fix this end relative to the lower anchor.

## Claims

1. Safety system (10) for a structure, e.g. for a roof, in particular a pitched roof (1), a pylon, or a wind turbine, comprising an anchor (11) attached or configured to be attached to an upper part of the structure (1) and/or upwards of a work area and a safety line (14) with which a person working on the structure (1) can be secured to the anchor (11), a guide member (13) comprising a first end for giving out the safety line (14) and a second end for feeding the safety line (14) to the guide member (13),
**characterised in that**,
said first end of the guide member (13) is securely connected to the anchor (11), such that the second end of the guide member (13) is positioned at a lower location on the structure (1) or below the structure.

2. System (10) according to claim 1, wherein the first end of the guide member (13) is positioned at and/or in the anchor (11) or connected to the anchor (11) via a further element, such as a cable, chain or rod.

3. System (10) according to claim 1 or 2, wherein the second end of the guide member (13) is located within reach of a safely accessible location.

4. System (10) according to any one of the preceding claims, comprising a further anchor (12) for securing a portion or end of the safety line (14).

5. System (10) according to claim 4, wherein the second end of the guide member (13) is positioned at and/or in the anchor (12) or connected to the anchor (12) via a further element.

6. System (10) according to any one of the preceding claims, wherein at least one of the anchors (11, 12), preferably at least the upper anchor (11), is attached to a load bearing element (2, 3, 4) of the structure.

7. System (10) according to any one of the preceding claims, wherein the guide member comprises a tube (13) or gutter.

8. System (10) according to any one of the preceding claims, wherein at least part of the guide member (13) is positioned beneath or integrated in roof covering.

9. System (10) according to any one of the preceding claims, wherein at least one of the anchors (11, 12) is positioned beneath or integrated in roof covering.

10. System (10) according to any one of the preceding claims, wherein the first end of the guide member (13) comprises a bend (17).

11. System (10) according claim 10, wherein the bend (17) extends over at least 90°.

12. System (10) according to claim 10 or 11, wherein the bend (17) is arranged to permanently deform in case of an incident.

13. System (10) according to any one of the preceding claims, wherein the safety line comprises a reinforcement, such as a core or sheath, and/or is a braided rope (14).

14. System (10) according to claim 13, wherein the ratio of the pitch of the braid of the rope and the diameter of the rope is smaller than 2.5, preferably smaller than 2.

15. Structure, such as a roof (1), pylon, or wind turbine, comprising the system of claim 1.

## Patentansprüche

1. Sicherheitssystem (10) für eine Struktur, z.B. für ein Dach, insbesondere ein Schrägdach (1), einen Mast oder eine Windturbine, aufweisend einen Anker (11), der an einem oberen Teil der Struktur (1) und/oder oberhalb eines Arbeitsbereichs angebracht ist oder konfiguriert ist, um daran angebracht zu werden, und eine Sicherheitsleine (14), mit welcher eine an der Struktur (1) arbeitende Person an dem Anker (11) gesichert werden kann, ein Führungselement (13) mit einem ersten Ende zum Ausgeben der Sicherheitsleine (14) und einem zweiten Ende zum Zuführen der Sicherheitsleine (14) zu dem Führungselement (13),
**dadurch gekennzeichnet, dass** das erste Ende des Führungselements (13) sicher mit dem Anker (11) verbunden ist, derart, dass das zweite Ende des Führungselements (13) an einem tieferen Ort an der Struktur (1) oder unterhalb der Struktur positioniert ist.

2. System (10) nach Anspruch 1, wobei das erste Ende des Führungselements (13) an und/oder in dem Anker (11) positioniert ist oder über ein weiteres Element, beispielsweise ein Kabel, eine Kette oder eine Stange, mit dem Anker (11) verbunden ist.

3. System (10) nach Anspruch 1 oder 2, wobei das zweite Ende des Führungselements (13) sich innerhalb der Reichweite eines sicher zugänglichen Orts befindet.

4. System (10) nach einem der vorstehenden Ansprüche, aufweisend einen zusätzlichen Anker (12) zum Sichern eines Abschnitts oder Endes der Sicherheitsleine (14).

5. System (10) nach Anspruch 4, wobei das zweite Ende des Führungselements (13) an und/oder in dem Anker (12) positioniert ist oder über ein weiteres Element mit dem Anker (12) verbunden ist.

6. System (10) nach einem der vorstehenden Ansprüche, wobei mindestens einer der Anker (11, 12), vorzugsweise zumindest der obere Anker (11), an einem lasttragenden Element (2, 3, 4) der Struktur angebracht ist.

7. System (10) nach einem der vorstehenden Ansprüche, wobei das Führungselement ein Rohr (13) oder eine Rille aufweist.

8. System (10) nach einem der vorstehenden Ansprüche, wobei mindestens ein Teil des Führungselements (13) unterhalb einer Dachbedeckung angeordnet oder in eine Dachbedeckung integriert ist.

9. System (10) nach einem der vorstehenden Ansprüche, wobei mindestens einer der Anker (11, 12) unterhalb einer Dachbedeckung angeordnet oder in eine Dachbedeckung integriert ist.

10. System (10) nach einem der vorstehenden Ansprüche, wobei das erste Ende des Führungselements (13) eine Biegung (17) aufweist.

11. System (10) nach Anspruch 10, wobei die Biegung (17) sich über mindestens 90° erstreckt.

12. System (10) nach Anspruch 10 oder 11, wobei die Biegung (17) angeordnet ist, um sich im Fall eines Ereignisses permanent zu verformen.

13. System (10) nach einem der vorstehenden Ansprüche, wobei die Sicherheitsleine eine Verstärkung, beispielsweise einen Kern oder eine Hülle, aufweist und/oder ein geflochtenes Seil (14) ist.

14. System (10) nach Anspruch 13, wobei das Verhältnis der Ganghöhe des Geflechts des Seils zum Durchmesser des Seils kleiner als 2,5, vorzugsweise kleiner als 2 ist.

15. Struktur, beispielsweise ein Dach (1), ein Mast oder eine Windturbine, aufweisend das System nach Anspruch 1.

## Revendications

1. Système de sécurité (10) pour une structure, par exemple pour un toit, en particulier un toit incliné (1), un pylône, ou une éolienne, comprenant un élément d'ancrage (11) attaché ou configuré pour être attaché à une partie supérieure de la structure (1) et/ou vers le haut d'une zone de travail et d'une ligne de sécurité (14) avec laquelle une personne travaillant sur la structure (1) peut être fixée à l'élément d'ancrage (11), un élément de guidage (13) comprenant une première extrémité pour distribuer la ligne de sécurité (14) et une seconde extrémité pour amener la ligne de sécurité (14) à l'élément de guidage (13),
**caractérisé en ce que**
ladite première extrémité de l'élément de guidage (13) est raccordée en toute sécurité à l'élément d'ancrage (11) de sorte que la seconde extrémité de l'élément de guidage (13) soit positionnée à un emplacement inférieur sur la structure (31) ou sous la structure.

2. Système (10) selon la revendication 1, dans lequel la première extrémité de l'élément de guidage (13) est positionnée sur et/ou dans l'élément d'ancrage (11) ou raccordée à l'élément d'ancrage (11) par le biais d'un autre élément, tel qu'un câble, une chaîne ou une barre.

3. Système (10) selon la revendication 1 ou 2, dans lequel la seconde extrémité de l'élément de guidage (13) est positionnée à la portée d'un emplacement accessible en toute sécurité.

4. Système (10) selon l'une quelconque des revendications précédentes, comprenant un autre élément d'ancrage (12) pour fixer une portion ou extrémité de la ligne de sécurité (14).

5. Système (10) selon la revendication 4, dans lequel la seconde extrémité de l'élément de guidage (13) est positionnée sur et/ou dans l'élément d'ancrage (12) ou raccordée à l'élément d'ancrage (12) par le biais d'un autre élément.

6. Système (10) selon l'une quelconque des revendications précédentes, dans lequel au moins un des éléments d'ancrage (11, 12), de préférence au moins l'élément d'ancrage supérieur (11), est attaché à un élément porteur de charge (2, 3, 4) de la structure.

7. Système (10) selon l'une quelconque des revendications précédentes, dans lequel l'élément de guidage comprend un tube (13) ou une gouttière.

8. Système (10) selon l'une quelconque des revendications précédentes, dans lequel au moins une partie de l'élément de guidage (13) est positionnée sous ou est intégrée dans une couverture de toit.

9. Système (10) selon l'une quelconque des revendications précédentes, dans lequel au moins un des éléments d'ancrage (11, 12) est positionné sous ou est intégré dans une couverture de toit.

10. Système (10) selon l'une quelconque des revendications précédentes, dans lequel la première extrémité de l'élément de guidage (13) comprend un coude (17) .

11. Système (10) selon la revendication 10, dans lequel le coude (17) s'étend sur au moins 90°.

12. Système (10) selon la revendication 10 ou 11, dans lequel le coude (17) est agencé pour se déformer de manière permanente en cas d'incident.

13. Système (10) selon l'une quelconque des revendications précédentes, dans lequel la ligne de sécurité comprend un renforcement tel qu'un coeur ou une gaine, et/ou est une corde tressée (14).

14. Système (10) selon la revendication 13, dans lequel le rapport du pas de la tresse de la corde et du diamètre de la corde est inférieur à 2,5, de préférence inférieur à 2.

15. Structure telle qu'un toit (1), un pylône, ou une éolienne, comprenant le système selon la revendication 1.
